# EUROPÄISCHE PATENTSCHRIFT

(11) **EP 3 797 959 B1**
(45) Veröffentlichungstag und Bekanntmachung des Hinweises auf die Patenterteilung: **26.08.2026**
(21) Anmeldenummer: 20188222.2
(22) Anmeldetag: 28.07.2020
(51) Int. Cl.: B29C 39/00, C08F 265/06, C08F 292/00, C08K 3/36, E03C 1/18, C04B 26/06, C08K 3/04, C08K 3/22, C04B 111/60

(54) **WÄRMEAUSHÄRTBARE BIOBASIERTE GIESSMASSE, HIERAUS HERGESTELLTER FORMKÖRPER SOWIE VERFAHREN ZUR HERSTELLUNG EINES SOLCHEN FORMKÖRPERS**
THERMOSETTING BIOBASED CASTING MATERIAL, MOLDED ITEMS PRODUCED FROM SAME, AND METHOD FOR PRODUCING SUCH A MOULDED ITEM
MATIÈRE DE COULÉE BIOBASÉE THERMODURCISSABLE, CORPS MOULÉ FABRIQUÉ À PARTIR DE CELLE-CI AINSI QUE PROCÉDÉ DE FABRICATION D'UN TEL CORPS MOULÉ

(30) Priorität: 25.09.2019 DE 102019125777
(43) Veröffentlichungstag der Anmeldung: 31.03.2021
(73) Patentinhaber: Schock GmbH, 94209 Regen (DE)
(72) Erfinder: DATSYUK, Vitaliy, 94227 Zwiesel (DE); ORENDORZ, Adam, 94227 Zwiesel (DE); ACHATZ, Oskar, 94253 Bischofsmais (DE)
(74) Vertreter: Lindner Blaumeier Patent- und Rechtsanwälte

(56) Entgegenhaltungen:
- EP-A1- 1 826 241
- IT-A1- 201600 108 376
- EVONIK INDUTRIES: "VISIOMER The first choice in methacrylate solutions", 30 June 2015 (2015-06-30), XP055522035, Retrieved from the Internet <URL:https://www.ulprospector.com/documents/1544462.pdf?bs=34161&b=738751&st=20&r=eu&ind=adhesives> [retrieved on 20181108]

## Beschreibung

Die Erfindung betrifft eine wärmeaushärtbare biobasierte Gießmasse, geeignet für die Herstellung eines Formkörpers, bestehend aus einer aus der polymerisierten Gießmasse gebildeten Polymermatrix mit darin eingebetteten Füllstoffpartikeln. Ferner betrifft die Erfindung einen aus einer solchen Gießmasse hergestellten Formkörper, beispielsweise in Form einer Küchenspüle, eines Waschbeckens, einer Arbeitsplatte, einer Badewanne oder einer Duschwanne oder einer Arbeitsplatte, wobei die polymerisierte Gießmasse ein Bio-Kompositmaterial bestehend aus einer Polymermatrix mit eingebetteten Füllstoffpartikeln bildet. Das erfindungsgemäße Bio-Kompositmaterial bzw. der erfindungsgemäße Formkörper wird hergestellt, indem zur Herstellung der erfindungsgemäßen Gießmasse zunächst anorganische Füllstoffpartikel in einer Lösung wenigstens eines Bio-(Co)Polymers in eine Mischung aus mono- und polyfunktionellen Biomonomeren dispergiert wird, wonach die Gießmasse in eine Form eingespritzt wird, der Formhohlraum gefüllt wird und das Material gemäß der Hohlraumform durch Wärme fixiert wird über die wärmeinduzierte Polymerisation der monofunktionellen Bio-Monomere und wärmeinduzierte Vernetzung der polyfunktionellen Bio-Monomere.

Es ist bekannt, Küchenspülen z.B. aus einer polymerisierten Gießmasse herzustellen. Ein Beispiel davon ist in IT 2016 0010 8376 A1 offenbart. Eine solche Küchenspüle weist demzufolge eine Polymermatrix auf in der zur Einstellung gewünschter Eigenschaften Füllstoffpartikel eingebettet sind. Die Gießmasse wird unter Verwendung geeigneter vernetzbarer Polymere hergestellt, wobei Polymere petrochemischen Ursprungs, also Polymere auf Erdölbasis verwendet werden. Zwar zeigen die derart hergestellten Küchenspülen sehr gute mechanische Eigenschaften und sind thermisch über einen großen Temperaturbereich stabil. Gleichwohl ist die Verwendung derartiger Polymere nicht zuletzt aus Gründen der Nachhaltigkeit (Umweltschutz & Ressourcenschonung) nachteilig.

Der Erfindung liegt daher das Problem zu Grunde, eine verbesserte Gießmasse anzugeben.

Zur Lösung des Problems ist eine wärmeaushärtbare biobasierte Gießmasse vorgesehen, umfassend:
(a) ein oder mehrere mono- und ein oder mehrere polyfunktionelle Acryl- und Methacryl- Bio-Monomere pflanzlichen oder tierischen Ursprungs
(b) mehrere Polymere oder Copolymere gewählt aus Polyacrylaten Polymethacrylaten, Polyolen, Polyestern aus recyceltem Material oder pflanzlichen oder tierischen Ursprungs,
(c) anorganische Füllstoffpartikel natürlichen Ursprungs,
wobei der Anteil des oder der mono- und polyfunktionellen Acryl- und Methacryl-Bio-Monomere 10 - 40 Gew.-%, der Anteil der Polymere oder Copolymere 1 - 16 Gew.-% und der Anteil der anorganischen Füllstoffpartikel 44 - 89 Gew.-% beträgt.

Die erfindungsgemäße Gießmasse zeichnet sich dadurch aus, dass die zu einem Großteil, wenn nicht sogar zu 100%, aus biologischen bzw. natürlichen Materialien insbesondere in Bezug auf die verwendeten, sich vernetzenden Stoffe, besteht. So sind erfindungsgemäß die verwendeten mono- und polyfunktionellen Acryl- und Methacryl- Bio-Monomere ausschließlich pflanzlichen oder tierischen Ursprungs. Hier kommen also keine petrochemisch gewonnenen Polymere zum Einsatz. Ein Bio-Monomere ist ein Monomer eines Bio-Polymers. Der Begriff "polyfunktionell" umfasst bi-, tri- und höherfunktionelle Bio-Monomere.

Die verwendeten Polymere oder Copolymere sind vorzugsweise ebenfalls rein pflanzlichen oder tierischen Ursprungs, d.h., dass auch diese Stoffe nicht petrochemischen Ursprungs sind. Hier besteht jedoch alternativ zur Verwendung von Stoffen pflanzlichen/tierischen Ursprungs auch die Möglichkeit, Polymere oder Copolymere aus Recyclingmaterial zu verwenden. Zwar ist dieses Material zumeist petrochemischen Ursprungs, jedoch wird kein Neumaterial verwendet, sondern ein bereits vorhandenes, jedoch recyceltes Material wiederverwendet, was aus Umweltgesichtspunkten ebenfalls vorteilhaft ist. Da die Bio-Monomere neben den verwendeten anorganischen Füllstoffen, die ebenfalls natürlichen Ursprungs sind, den größeren Anteil auf der Polymerseite ausmachen, ist innerhalb der erfindungsgemäßen Gießmasse selbst bei Verwendung von Recyclingmaterial eine Großteil bisheriger verwendeter Stoffe auf petrochemischer Basis durch Bio-Material in Form der Bio-Monomere ersetzt. Bevorzugt natürlich werden auch Polymere bzw. Copolymere rein pflanzlichen oder tierischen Ursprungs verwendet, so dass sich in diesem Falle eine zu 100% auf natürlichen Materialien bestehende Gießmasse ergibt, da wie beschrieben auch die Füllstoffe rein natürlichen Ursprungs sind. Damit handelt es sich bei dem aus der erfindungsgemäßen Gießmasse hergestellten Formkörper folglich um einen Bio-Formkörper, der überwiegend oder vorzugsweise vollständig aus biologischen, also natürlichen Materialien besteht. Die Herstellung des Bio-Verbundwerkstoffe aus den Füllstoffpartikeln und den sich vernetzenden Materialien, die aus erneuerbaren Quellen hergestellt werden, reduziert den Verbrauch der petrochemisch hergestellten Materialien und damit den Erdölverbrauch und wirkt sich positiv auf die Umwelt aus.

Trotz Verwendung von überwiegend oder ausschließlich natürlichen Materialien zur Herstellung der Gießmasse bzw. des Formkörpers, also z.B. einer Küchenspüle, hat sich überraschend herausgestellt, dass der Formkörper sehr gute, teilweise sogar noch bessere mechanische Eigenschaften, insbesondere hinsichtlich der Schlagzähigkeit oder der Kratzfestigkeit im Vergleich mit einer bekannten, aus petrochemisch gewonnenen vernetzenden Materialien hergestellten Gießmasse bzw. einem derartigen Formkörper zeigt.

Die Herstellung von Bio-Komposit-Formkörpern, wie Küchenspülen, Duschwannen, Badewannen, Waschbecken und Arbeitsplatten, aus hochwertigen mono- und polyfunktionellen Bio-Acrylat- und Bio-Methacrylatmonomeren ermöglicht es, hohe technische Leistungsanforderungen und einen erhöhten Bio Renewable Carbon Content (BRC) (Anteil an erneuerbarem Kohlenstoff bzw. der biobasierte Kohlenstoffgehalt) in Produkten zu kombinieren. Es gibt eine Vielzahl von verschiedenen bioverfügbaren Quellen zur Herstellung von mono- und polyfunktionellem Bio-Acrylat- und Bio-Methacrylatmonomeren, wie z.B. Pflanzenöl, tierisches Fett, Holz. Ein BRC in Biomonomeren kann bis zu 90 % erreicht werden.

Der Formkörper aus dem Bio-Kompositmaterial besteht aus der Mischung des anorganischen Füllstoffs, der über einen vernetzenden Polymerisationsprozess der mono- und polyfunktionellen Biomonomere in die Polymermatrix eingebettet ist und durch die Verwendung der nachwachsenden Rohstoffe die große Nachhaltigkeitswirkung erzielt.

Das Gewichtverhältnis von monofunktionellen Biomonomeren zu polyfunktionellen Biomonomeren sollte erfindungsgemäß 2 : 1 bis 80 : 1, vorzugsweise 4 : 1 bis 70 : 1, insbesondere 5 : 1 bis 60 : 1 betragen.

Es kann ein monofunktionelles Biomonomer in Form eines biobasierten Acrylats verwendet werden. Diese kann gewählt werden aus n-Butylacrylat, Methylacrylat, Ethylacrylat, tert.-Butylacrylat, Isobutylacrylat, Isodecylacrylat, Dihydrodicyclopentadienylacrylat, Ethyldiglykolacrylat, Heptadecylacrylat, 4-Hydroxybutylacrylat, 2-Hydroxyethylacrylat, Hydroxyethylcaprolaktonacrylat, Polycaprolaktonacrylat, Hydroxypropylacrylat, Laurylacrylat, Stearylacrylat, Tertiobutylacrylat, 2(2-Ethoxy)Ethylacrylat, Tetrahydrofurfurylacrylat, 2-Phenoxyethylacrylat, ethoxyliertes 4-Phenylacrylat, Trimethylcyclohexylacrylat, Octyldecylacrylat, Tridecylacrylat, ethoxyliertes 4-Nonylphenolacrylat, Isobornylacrylat, zyklisches Trimethylolpropan-Formalacrylat, ethoxyliertes 4-Laurylacrylat, Polyesteracrylat, Stearylacrylat, hyperverzweigtes Polyesteracrylat, Melaminacrylat, Silikonacrylat, Epoxyacrylat.

Ferner kann ein monofunktionelles Biomonomer in Form eines biobasierten Methacrylats verwendet werden. Dieses kann gewählt werden aus Methylmethacrylat, Ethylmethacrylat, n-Butylmethacrylat, Isobutylmethacrylat, tert-Butylmethacrylat, Behenylmethacrylat, Ehenylpolyethylenglykolmethacrylat, Cyclohexylmethacrylat, Isodecylmethacrylat, 2-Ethylhexylmethacrylat, Laurylmethacrylat, Stearylmethacrylat, Stearylpolyethylenglykolmethacrylat, Isotridecylmethacrylat, Ureidomethacrylat, Tetrahydrofurfurylmethacrylat, Phenoxyethylmethacrylat, 3,3,5-Trimethylzyclohexanolmethacrylat, Isobornylmethacrylat, Methoxypolyethylenglykolmethacrylat, Glycedylmethacrylat, Hexylethylmethacrylat, Glycerolformalmethacrylat, Lauryltetradecylmethacrylat, C17,4-Methacrylat.

Ein polyfunktionelles Biomonomer kann in Form eines biobasierten Acrylats verwendet werden. Dieses kann gewählt werden aus 1,6 Hexandioldiacrylat, Polyethylenglykoldiacrylat, Tetraethylenglykoldiacrylat, Tripropylenglykoldiacrylat, Polybutadiendiacrylat, 3 Methyl-1,5-Pentandioldiacrylat, ethoxyliertes Bisphenol A-Diacrylat, Dipropylenglykoldiacrylat, ethoxyliertes Hexandioldiacrylat, 1,10 Dekandioldiacrylat, Esterdioldiacrylat, alkoxyliertes Diacrylat, Trizyclodecandimethanoldiacrylat, propoxyliertes Neopentylglykoldiacrylat, Pentaerythritoltetraacrylat, Trimethylolpropantriacrylat, Di-Trimethylolpropantetraacrylat, Tris (2-Hydroxyethyl)isocyanurattriacrylat, Di-Pentaerythritpentaacrylat, ethoxyliertes Trimethylolpropantriacrylat, Pentaerythrittriacrylat, propoxyliertes Trimethylolpropantriacrylat, ethoxyliertes Pentaerythrittetraacrylat, propoxyliertes Glyceryltriacrylat, aliphatisches Urethandiacrylat, aliphatisches Urethanhexaacrylat, aliphatisches Urethantriacrylat, aromatisches Urethandiacrylat, aromatisches Urethantriacrylat, aromatisches Urethanhexaacrylat, Polyesterhexaacrylat, epoxidiertes Sojaöldiacrylat.

Ferner kann ein polyfunktionelles Biomonomer in Form eines biobasierten Methacrylates verwendet werden. Dieses kann gewählt werden aus Triethylenglykoldimethacrylat, Ethylenglykoldimethacrylat, Polyethylenglykoldimethacrylat, 1,4-Butandioldimethacrylat, Diethylenglykoldimethacrylat, 1,6 Hexandioldimethacrylat, 1,10-Dekandioldimethacrylat, 1,3-Butylenglykoldimethacrylat, ethoxyliertes Bisphenol A Dimethacrylat, Trizyclodecandimethanoldimethacrylat, Trimethylolpropantrimethacrylat.

Erfindungsgemäß sollte das Gewichtsverhältnis von mono- oder polyfunktionellen Acrylaten und Methacrylaten zu den Polymeren oder Copolymeren, insbesondere gewählt aus Polyacrylaten, Polymethacrylaten, Polyolen oder Polyesteren 90:10 bis 60:40, vorzugsweise 85:15 bis 70:30 betragen.

Auch die anorganischen Füllstoffpartikel sind natürlichen, also biologischen Ursprungs und nicht synthetisch hergestellt. Sie können gewählt werden aus SiO₂, Al₂O₃, TiO₂, ZrO₂, Fe₂O₃, ZnO, Cr₂O₅, Kohlenstoff, Metallen oder Metalllegierungen, wobei auch Mischungen zweier oder mehrerer verschiedener Füllstoffpartikelarten verwendet werden können. Das Mischungsverhältnis kann beliebig sein.

Dabei sollten die anorganische Füllstoffpartikel eine Partikelgröße von 0,010 bis 8000 µm, vorzugsweise 0,05 bis 3000 µm, und insbesondere 0,1 bis 1300 µm aufweisen. Ferner sollten die anorganische Füllstoffpartikel ein Seitenverhältnis von 1,0 bis 1000 (Länge : Breite der Einzelpartikel) aufweisen.

Für eine einfache Verarbeitbarkeit sollte die Viskosität der erhaltenen Gießmasse so eingestellt sein, dass die Gießmasse mittels einer geeigneten Spritzvorrichtung unter Druck in eine Form, deren Formkavität vollständig ausfüllend, eingespritzt werden kann.

Neben der Gießmasse betrifft die Erfindung einen Formkörper, der aus der erfindungsgemäßen Gießmasse hergestellt ist. Es handelt sich, da die Gießmasse quasi eine Bio-Gießmasse ist, da sie vorzugsweise sogar zu 100% aus natürlichen, biologischen Stoffen besteht, folglich um einen Bio-Kompositkörper, also z.B. eine Bio-Komposit-Küchenspüle o.dgl..

Dabei können unterschiedliche Formkörpertypen hergestellt werden. So kann es sich bei dem Formkörper um eine Küchenspüle, eine Duschwanne, ein Waschtisch, eine Badewanne, eine Arbeitsplatte oder ein Boden-, Wand- oder Deckenpaneel handeln, wobei diese Aufzählung nicht abschließend ist.

Wie bereits beschrieben, hat sich gezeigt, dass die erhaltenen Formkörper trotz Verwendung biobasierter Ausgangsmaterialien, aus denen die Gießmasse besteht, sehr gute Eigenschaften, insbesondere mechanische Eigenschaften aufweisen. Das polymerisierte Bio-Kompositmaterial des Formkörpers sollte eine Schlagfestigkeit von 2 bis 5 mJ/mm² aufweisen, wie es auch eine thermische Stabilität -30 bis 300 °C aufweisen sollte.

Ein vorstehend beschriebener Vorteil der Erfindung ist, dass die Verwendung von einem, zwei oder mehreren monofunktionalen Biomonomeren es ermöglicht, die thermischen, mechanischen und Oberflächeneigenschaften des Endprodukts, also des fertigen Formkörpers, entsprechend den Produktanforderungen zu variieren. Die Schlagzähigkeit kann z.B. durch Zugabe von Bio-Laurylmethacrylatmonomer mit guter Flexibilität verbessert werden.

Die Konzentration des Bio-Laurylmethacrylats im Bio-Kompositmaterial beträgt vorzugsweise ca. 0,5 bis ca. 10 Gew.-%, insbesondere von 0,7 bis 5,0 Gew.-%. Es wurde festgestellt, dass eine geringe Menge an flexiblem Bio-Laurylmethacrylat zu einer Verbesserung der Schlagzähigkeit führt.

Ein weiterer vorstehend beschriebener Vorteil der Erfindung ist, dass die thermische Beständigkeit des fertigen Formkörpers z.B. durch Zugabe von Bio-Isobornylmethacrylatmonomer mit erhöhter thermischer Stabilität verbessert werden kann.

Die Konzentration des Bio-Isobornylmethacrylats im Bio-Kompositmaterial beträgt vorzugsweise ca. 1,0 bis ca. 20 Gew.-%, insbesondere von 2,0 bis 17,0 Gew.-%. Es wurde festgestellt, dass eine geringe Menge an Bio-Isobornylmethacrylat zu einer Verbesserung der Kratzfestigkeit führt.

Ein weiterer Vorteil der Erfindung ist, dass die Alterungsbeständigkeit z.B. durch Zugabe von Bio-Isobornylacrylatmonomer mit verbesserter Witterungsbeständigkeit verbessert werden kann. Die Konzentration des Bio-Isobornylacrylats im Bio-Kompositmaterial beträgt vorzugsweise ca. 1,0 bis ca. 10 Gew.-%, insbesondere von 2,0 bis 7,0 Gew.-%. Es wurde festgestellt, dass eine geringe Menge an Bio-Isobornylacrylat zu einer Verbesserung der Alterungsbeständigkeit führt.

Ein weiterer Vorteil der Erfindung ist, dass die chemische Beständigkeit z.B. durch Zugabe von Bio-(1,10-Decandioldiacrylat) bifunktionellem Monomer verbessert wird. Die Konzentration des Bio-(1,10-Decandioldiacrylats) im Bio-Kompositmaterial beträgt vorzugsweise ca. 0,15 bis ca. 10 Gew.-%, insbesondere von 0,3 bis 5,0 Gew.-%. Es wurde festgestellt, dass eine geringe Menge an Bio-(1,10-Decandioldiacrylat) zu einer Verbesserung der chemischen Beständigkeit führt.

Ein weiterer Vorteil der Erfindung ist, dass die Füllstoffdispersion z.B. durch Zugabe von Bio-(propoxyliertem (3) Glyceryltriacrylat) trifunktionellem Monomer auf Grund einer sehr guten Füllstoffbenetzung erhöht wird. Die Konzentration des Bio-(propoxylierten (3) Glyceryltriacrylats) im Bio-Kompositmaterial beträgt vorzugsweise von etwa 0,1 bis etwa 5 Gew.-%, insbesondere von 0,3 bis 2,0 Gew.-%. Es wurde festgestellt, dass eine geringe Menge an Bio-(propoxyliertem (3) Glyceryltriacrylat) zu einer Verbesserung der Füllstoffverteilung in einer Matrix und zu den verbesserten thermischen und mechanischen Eigenschaften führt.

Ein weiterer Vorteil der Erfindung ist, dass die Abriebfestigkeit der Bio-Kompositmasse des Formgegenstands z.B: durch Zugabe von Bio-Polyethylenglykoldimethacrylat bifunktionellem Monomer mit erhöhter Abriebfestigkeit verbessert werden kann. Die Konzentration des Bio-Polyethylenglykoldimethacrylats im Bio-Kompositmaterial beträgt vorzugsweise von ca. 0,1 bis ca. 10 Gew.-%, insbesondere von 0,3 bis 5,0 Gew.-%. Es wurde festgestellt, dass eine geringe Menge an Bio-Polyethylenglykoldimethacrylat zu einer Verbesserung der Abriebfestigkeit führt.

Ein weiterer Vorteil der Erfindung ist, dass die Kraftzfestigkeit des Formkörpers z.B. durch Zugabe von Bio-Dipentaerythritolpentaacrylat polyfunktionellem Monomer mit erhöhter Kratzfestigkeit verbessert werden kann. Die Konzentration des Bio-Dipentaerythritolpentaacrylats im Bio-Kompositmaterial beträgt vorzugsweise ca. 0,1 bis ca. 7 Gew.-%, insbesondere von 0,3 bis 5,0 Gew.-%. Es wurde festgestellt, dass eine geringe Menge an Bio-Dipentaerythritolpentaacrylat zu einer Verbesserung der Kratzfestigkeit führt.

Anorganische Füllstoffe können in Form von SiO₂ in Form von Quarzpartikeln, Cristobalitteilchen, pyrogenen Kieselsäurepartikeln, belüfteten Kieselsäurepartikeln, Kieselfasern, Kieselsäurefibrillen, Silikatpartikeln, wie Schichtsilikaten; Al₂O₃-Partikeln, TiO₂-Partikeln, Fe₂O₃-Partikeln, ZnO-Partikeln, Cr₂O₅-Partikeln, Rußpartikeln, Kohlenstoff Nanoröhren - Partikeln, Graphitpartikeln oder Graphenpartikeln verwendet werden.

Um die ausgezeichnete stabile Dispersion des anorganischen Füllstoffs in der Polymermatrix zu erhalten, kann die Monomermischung zur Einstellung einer geeigneten Viskosität eine biobasierte Zusammensetzung von Polymeren und/oder Copolymeren aus recycelten oder biobasierten Ressourcen enthalten.

Ferner betrifft die Erfindung ein Verfahren zur Herstellung eines Formkörpers der vorstehend beschriebenen Art, bei dem eine Gießmasse der ebenfalls vorstehend beschriebenen Art verwendet wird, die in eine Form gegeben wird, in der sie bei gegenüber Raumtemperatur erhöhter Temperatur polymerisiert, wonach der polymerisierte Formkörper der Form entnommen wird und abkühlt.

Dabei sollte die Temperatur während der Polymerisation zwischen 60 - 140°C, vorzugsweise zwischen 75 - 130°C und insbesondere 80 -110°C betragen.

Ferner sollte die Haltezeit, während der die Gießmasse zur Polymerisation in der Form bleibt, zwischen 15 - 50 min, vorzugsweise 20 - 45 min und insbesondere 25 - 35 min betragen.

Die Herstellung des Formkörpers aus der wärmehärtbaren biobasierten Gießmasse ist ein mehrstufiger Prozess, der Folgendes umfasst
- Herstellung von Polymermatrixkomponenten
- Dispersion von anorganischen Füllstoffen in einer Polymermatrix
- Vernetzungspolymerisation von Küchenspülen, Waschbecken, Badewannen, Arbeitsplatten.

Nachfolgend werden mehrere Versuchsbeispiele zur näheren Darstellung der erfindungsgemäßen Gießmasse, des erfindungsgemäßen Formkörpers und des erfindungsgemäßen Verfahrens gegeben.

### Beispiel 1:

### Herstellung von Polymermatrixkomponenten aus verschiedenen monofunktionellen Monomeren (Referenzbeispiel)

### Verwendete Komponenten:

(a) Monofuntionelle Biomonomere:
   Isobornylmethacrylat (IBOMA, Evonik Performance Materials GmbH), Laurylmethacrylat (LMA, Arkema France), Isobornylacrylat (IBOA; Miwon Specialty Chemical Co., Ltd), Glycerolformalmethacrylat (GLYFOMA, Evonik Performance Materials GmbH), Laurylacrylat (LA, Arkema France), Lauryltetradecylmethacrylat (LTDMA, Miwon Specialty Chemical Co., Ltd), C17,4-Methacrylat (C17.4-MA, Evonik Performance Materials GmbH). Komponenten entstammen alle pflanzlichen oder tierischen Ursprungs, beispielweise wird VISIOMER^{®} Terra IBOMA aus Kieferharz hergestellt.
(b) Polymer:
   Acrylglas-Feinmahlgut XP 85 (recyceltes PMMA (Kunststoff- und Farben-GmbH))
(c) Füllstoff:
   SiO₂ [80 % Quarz Partikelgroße 0.06 - 0.3 mm (Dorfner GmbH); 20 % Quarzmehl, Partikelgroße 0.1 - 0.70 µm (Quarzwerke GmbH) und TiO₂-Partikel (Crystal International B.V.)
(d) Additive:
   Biobasierte Dispergieradditive (0.1 %) (BYK Chemie GmbH) und Thixotropieadditive (0,1 %) (BYK Chemie GmbH)

Die Zusammensetzungen für die Herstellung von Polymermatrizen werden durch Lösen von Acrylglas - Feinmahlgut XP 85 (recycelnde PMMA (Kunststoff- und Farben-GmbH) in der Mischung von monofunktionellen Monomeren von Tabelle 1: Isobornylmethacrylat (Evonik Performance Materials GmbH), Laurylmethacrylat LMA, Arkema France), Isobornylacrylat (Miwon Specialty Chemical Co., Ltd), Glycerolformalmethacrylat (Evonik Performance Materials GmbH), Laurylacrylat (Arkema France), Lauryltetradecylmethacrylat (Miwon Specialty Chemical Co., Ltd), C17,4-Methacrylat (Evonik Performance Materials GmbH) hergestellt. Das Reaktionsgemisch wurde auf 40 °C erhitzt, um die Löslichkeit für 100 min bis zum Erhalt einer klaren Lösung zu beschleunigen. Zum Vergleich der Matrixkomponenten wurden die Zusammensetzungen vorbereitet und in Tabelle 1 zusammengefasst:

**Tabelle 1:**

| Monofunktionelle Biomonomere | Muster 1 | Muster 2 | Muster 3 | Muster 4 | Muster 5 |
|---|---|---|---|---|---|
| Isobornylmethacrylat | 80 | | 45 | 50 | |
| Laurylmethacrylat | 20 | | | | 10 |
| Isobornylacrylat | | 80 | 45 | 40 | 60 |
| Glycerolformalmethacrylat | | | | | 30 |
| Laurylacrylat | | | | 10 | |
| Lauryltetradecylmethacrylat | | 20 | | | |
| C17,4-Methacrylat | | | 10 | | |

Alle Muster aus Tabelle 1 wurden als Lösungsmittel für Acrylglas-Feinmahlgut XP 85 in einem Verhältnis von 80:20 zur Erhöhung der Viskosität der Reaktionsmasse verwendet (von 120 bis 155 cPs, Brookfield Viscometer DVI Prime) gefolgt von einer Zugabe von 20 Gew.-% Bio-(1,10-Decandioldiacrylat) (Arkema France).

Klare Lösung von Acrylglas-Feinmahlgut XP85 in den Proben 1 - 5 mit Zusatz von Bio-(1,10-DDDA) wurde zur Dispersion einer Mischung aus anorganischen Füllstoffen (70 Gew.-%) verwendet, die 95 Gew.-% SiO₂ [80 % Quarz Partikelgroße 0.06 - 0.3 mm (Dorfner GmbH), 20 % Quarzmehl, Partikelgroße 0.1 - 0.70 µm (Quarzwerke GmbH)] und 5 % TiO₂-Partikel (Crystal International B.V.) enthält. Ferner wurde eine bio-basierte Dispergierung Additive (0.1 %) (BYK Chemie) und Thixotropieadditive (0,1 %) (BYK Chemie) zugegeben. Die derart hergestellte Gießmasse wurde für 20 Minuten gerührt (Dispermat AE-3M, VMA-Getzmann GmbH). Aus der Gießmasse wurde ein Formkörper in Form einer Küchenspüle hergestellt, indem die Gießmasse in eine Form gegossen und 35 Minuten lang bei 110 °C polymerisiert wurde.

Mechanische und thermische Eigenschaften der Küchenspülen aus der Probe 1 - 5.

**Tabelle 2:**

| Eigenschaften | Muster 1 | Muster 2 | Muster 3 | Muster 4 | Muster 5 | Vergleichsspüle |
|---|---|---|---|---|---|---|
| Schlagzähigkeit mJ/mm² | 3.4 | 3.2 | 2.7 | 2.5 | 2,4 | 2.3 |
| Kratzbeständigkeit | + | + | + | + | + | + |
| Taber-Abrieb, µg | 17 | 19 | 16 | 11 | 14 | 12 |
| Wärmewiderstand* | + | + | + | + | + | + |
| Temperaturwechselbeständigkeit** | + | + | + | + | + | + |

Für die Schlagzähigkeit Messungen werden 12 Proben der Größe 80 x 6 mm aus der Spüle geschnitten. Die Messungen werden am ZwickRoell HIT P Gerät durchgeführt.

Für die Kratzbeständigkeit Messungen werden eine Probe (100 x 100 mm) geschnitten und Topografie vor und nach Kratzen wurde gemessen (Mitutoyo Surftest SJ 500P).

Für Taber-Abrieb Test werden eine Probe (100 x100 mm) geschnitten und Abriebtest am Elcometer 1720 durchgeführt.
* Das Verfahren basiert auf der Prüfvorschrift DIN EN 13310, bei der der Prüfling mit der Temperatur 180°C für 20 min in der Mitte der Küchenspüle platziert wird, ohne sichtbare Veränderungen an der Oberfläche der Spüle zu hinterlassen.
   ** Das Verfahren basiert auf der Prüfvorschrift DIN EN 13310, bei der die Spüle für 1000 Zyklen mit kaltem - heißem Wasser behandelt wird. Heißes Wasser, T=90 °C, fließt 90 Sekunden lang in die Spüle, gefolgt von einer Entspannung für 30 Sekunden, mit weiter fließendem Kaltwasser (T= 15 °C) für die nächsten 90 Sekunden. Der Zyklus wird durch eine Entspannung für 30 Sekunden beendet.

Der Verbundwerkstoff für die Vergleichsspüle wurde unter Verwendung organischer Verbindungen petrochemischen Ursprungs gemäß Patentanmeldung DE 38 32 351 A1 hergestellt.

Die Tabelle zeigt, dass alle Versuchsbeispiele gemessene Eigenschaften zeigen, die mindestens denen der bekannten Vergleichsspüle, die aus nicht-biobasierten Komponenten, was die Monomere und Polymere angeht, besteht, entsprechen bzw. in den meisten Fällen sogar besser sind als bei der Vergleichsspüle. Insbesondere die Schlagzähigkeit ist bei den Mustern 1-4 zum Teil signifikant verbessert.

### Beispiel 2:

### Herstellung von Polymermatrixkomponenten mit verschiedenen polyfunktionellen Monomeren (Referenzbeispiel)

### Verwendete Komponenten:

(a) Monofuntionelle Biomonomere:
   IBOMA und LMA im Verhältnis 80:20 Isobornylmethacrylat (IBOMA, Evonik Performance Materials GmbH) und Laurylmethacrylat (LMA, Arkema France)
(b) Polyfunktionelle Monomere:
   1,10-(Decandioldiacrylat), propoxyliertes (3) Glyceryltriakrylat (Arkema France), Polyethylenglykoldimethacrylat (Arkema France) und epoxydiertes Sojaöldiacrylat (Miwon Specialty Chemical Co., Ltd)
(c) Polymer:
   Methacrylat-Copolymer (Röhm GmbH)
(d) Füllstoff:
   SiO₂ [80 % Quarz Partikelgroße 0.06 - 0.3 mm (Dorfner GmbH); 20 % Quarzmehl, Partikelgroße 0.1 - 0.70 µm (Quarzwerke GmbH)] und TiO₂-Partikel (Crystal International B.V.)
(e) Additive:
   Biobasierte Dispergierung Additive (0.1 %) (BYK Chemie GmbH) und Thixotropieadditive (0,1 %) (BYK Chemie GmbH)

Die Zusammensetzungen für die Herstellung von Polymermatrizen werden durch Lösen von Methacrylat-Copolymer (Röhm GmbH) in der Mischung aus monofunktionellen Monomeren IBOMA und LMA im Verhältnis 80:20 hergestellt. Das Reaktionsgemisch wurde auf 40 °C erhitzt, um die Löslichkeit für 150 min zu beschleunigen, gefolgt von der Zugabe der polyfunktionellen Monomere: 1,10 DDDA, propoxyliertes (3) Glyceryltriacrylat (Arkema France), Polyethylenglykoldimethacrylat (PEG-DMA, Arkema France), epoxidiertes Sojaöldiacrylat (Miwon Specialty Chemical Co., Ltd), um die Zusammensetzung zur Bildung der Polymermatrix zu finalisieren. Zum Vergleich der Matrixkomponenten wurden die Zusammensetzungen aus verschiedenen polyfunktionellen Monomeren hergestellt und in Tabelle 3 zusammengefasst. Die Konzentration der polyfunktionellen Monomere wird in Gew.-% auf die Menge der monofunktionellen Monomere angegeben:

**Tabelle 3:**

| Polyfunktionelle Biomonomere | Muster 6 | Muster 7 | Muster 8 | Muster 9 |
|---|---|---|---|---|
| 1.10-Decandioldiacrylat | 34 | 26 | 10 | |
| propoxylierte (3) Glyceryltriacrylat | 16 | | | |
| Polyethylenglycoldimethacrylat | | | | 10 |
| epoxidiertes Sojaöldiacrylate | | | 2 | 2 |

Mechanische und thermische Eigenschaften der Küchenspülen aus Proben 6 - 9

**Tabelle 4:**

| Eigenschaften | Muster 6 | Muster 7 | Muster 8 | Muster 9 | Vergleichsspüle |
|---|---|---|---|---|---|
| Schlagzähigkeit mJ/mm² | 3.3 | 2,9 | 3,2 | 2.7 | 2.3 |
| Kratzbeständigkeit | + | + | + | + | + |
| Taber-Abrieb, µg | 17 | 19 | 15 | 15 | 12 |
| Wärmewiderstand* | + | + | + | + | + |
| Temperaturwechselbeständigkeit** | + | + | + | + | + |

Die Messwerte der Tabelle 4 zeigen, dass auch innerhalb dieser Untersuchungsbeispiele die Formkörper zum Teil erheblich verbesserte mechanische Eigenschaften, insbesondere hinsichtlich der Schlagzähigkeit und der Kratzbeständigkeit zeigen. D.h., dass durch die Verwendung der biobasierten Ausgangsstoffe nicht nur eine aus Umweltsicht zweckmäßige Verbesserung erreicht wird, sondern auch eine Verbesserung insbesondere der mechanischen Eigenschaften der Formkörper.

### Beispiel 3:

### Herstellung von Polymermatrixkomponenten mit verschiedenen Recycling- oder Biopolymeren (Muster 10-12 sind Referenzbeispiele)

### Verwendete Komponenten:

(a) Monofuntionelle Biomonomere:
   IBOMA und LMA im Verhältnis 80:20 Isobornylmethacrylat (IBOMA, Evonik Performance Materials GmbH) und Laurylmethacrylat (LMA, Arkema France,)
(b) Polyfunktionelle Biomonomere: 20 Gew.-% Bio-(1,10-Decandioldiacrylat) (Arkema France).
(c) Polymer:
   recyceltes und/oder Biopolymere und/oder Biocopolymere: recyceltes PMMA (Kunststoff- und Farben-GmbH), Poly-(3-Hydroxybutyrat-co-3-hydroxyvalerat) (Ningbo Tianan Biologic Material Co. Ltd), Rizinusölpolymer (D.O.G Deutsche Oelfabrik Ges. f. chem. Erz. mbH & Co.KG)
(d) Füllstoff:
   SiO₂ [80 % Quarz Partikelgroße 0.06 - 0.3 mm (Dorfner GmbH); 20 % Quarzmehl, Partikelgroße 0.1 - 0.70 µm (Quarzwerke GmbH)] und TiO₂-Partikel (Crystal International B.V.)
(e) Additive:
   Biobasierte Dispergieradditive (0.1 %) (BYK Chemie) und Thixotropieadditive (0,1 %) (BYK Chemie)

Die Zusammensetzungen für die Herstellung von Polymermatrizen werden durch Lösen von recyceltem und/oder Biopolymer und/oder Biocopolymer (recyceltes PMMA (Kunststoff- und Farben-GmbH), Poly-(3-hydroxybutyrat-co-3-hydroxyvalerat) (Ningbo Tianan Biologic Material Co.Ltd), Rizinusölpolymer (D.O.G Deutsche Oelfabrik Ges. f. chem. Erz. mbH & Co.KG) in der Mischung aus monofunktionellen Monomeren IBOMA und LMA im Verhältnis 80:20 hergestellt. Das Reaktionsgemisch wurde auf 40 °C erhitzt, um die Löslichkeit für 100 min zu beschleunigen, gefolgt von der Zugabe von PEG-DMA (10 Gew.-% aus den monofunktionellen Monomeren) und epoxidierten Sojaöldiacrylats (2 Gew.-% aus den monofunktionellen Monomeren), um die Zusammensetzung zur Bildung der Polymermatrix zu finalisieren. Zum Vergleich der Matrixkomponenten wurden die Zusammensetzungen aus verschiedenen Biopolymeren hergestellt und in Tabelle 5 zusammengefasst. Die Konzentration des Biopolymers wird in Gew.-% auf die Menge der monofunktionellen Monomere angegeben:

**Tabelle 5:**

| Polymer | Muster 10 | Muster 11 | Muster 12 | Muster 13 |
|---|---|---|---|---|
| recycelte PMMA | 20 | 26 | | |
| Poly-(3-hydroxybutyrat-co-3-hydroxyvalerat) | | | 20 | 2 |
| Rizinusölpolymer | | | | 25 |

Küchenspülen wurden nach dem in Beispiel 1 beschriebenen Verfahren hergestellt.

Mechanische und thermische Eigenschaften der Küchenspülen aus der Probe 10 - 13.

**Tabelle 6:**

| Eigenschaften | Muster 10 | Muster 11 | Muster 12 | Muster 13 | Vergleichsspüle |
|---|---|---|---|---|---|
| Schlagzähigkeit mJ/mm² | 3.0 | 2,9 | 2,7 | 2,3 | 2.3 |
| Kratzbeständigkeit | + | + | + | + | + |
| Taber-Abrieb, µg | 17 | 15 | 16 | 18 | 12 |
| Wärmewiderstand* | + | + | + | + | + |
| Temperaturwechsel -beständigkeit** | + | + | + | + | + |

### Beispiel 4:

### Zubereitung des Formkörpers mit verschiedenen anorganischen Füllstoffen

### Verwendete Komponenten:

(a) Monofuntionelle Biomonomere:
   IBOMA und LMA im Verhältnis 80:20 Isobornylmethacrylat (IBOMA, Evonik Performance Materials GmbH) und Laurylmethacrylat (LMA, Arkema France)
(b) Polyfunktionelle Biomonomere:
   PEG-DMA und epoxidiertes Sojaöldiacrylat
(c) Polymer:
   recycelte PMMA (Kunststoff- und Farben-GmbH)
(d) Füllstoff:
   Quarz, Quarzmehl, Titandioxid, Eisenoxid, Ruß, Graphit, Aluminiumhydroxidtrihydrat
(e) Additive:
   Biobasierte Dispergieradditive (0.1 %) (BYK Chemie GmbH) und Thixotropieadditive (0,1 %) (BYK Chemie GmbH)

Eine Mischung für eine Polymermatrixbildung wird wie in den Beispielen 1, 2, 3, beschrieben hergestellt. 20 Gew.-%. recycelte PMMA (Kunststoff- und Farben-GmbH) wird in der Mischung (80:20 Gew.-%) aus monofunktionellen Monomeren, IBOMA und LMA gelöst. Das Reaktionsgemisch wurde auf 40 °C erhitzt, um die Löslichkeit für 100 min zu beschleunigen, gefolgt von der Zugabe der polyfunktionellen Monomere, 10 Gew.-% PEG-DMA und 2 Gew.-% epoxidiertes Sojaöldiakrylat, um die Zusammensetzung für die Bildung der Polymermatrix abzuschließen. Zum Vergleich wurden verschiedene anorganische Füllstoffe zugegeben, die in Tabelle 7 zusammengefasst sind. Quarz Partikel wurden von Dorfner GmbH hergestellt. Titandioxid Partikeln wurden von Cristal International hergestellt. Eisenoxid Partikeln wurden von Harold Scholz & Co GmbH hergestellt. Natural Ruß Partikel (Orion Engineered Carbon GmbH,), Natural Grafit wurden von RMC Remacon GmbH hergestellt. Aluminiumhydroxidtrihydrat (ATH) wurde von SHIJIAZHUANG CHENSHI IMPORT AND EXPORT CO. LTD. hergestellt.

**Tabelle 7:**

| Füllstoff | Muster 14 | Muster 15 | Muster 16 | Muster 17 |
|---|---|---|---|---|
| Quarz, Partikelgröße 0.06 - 0.3 mm | 52 | | 20 | 30 |
| Quarz, Partikelgröße 0.4 - 0.8 mm | | 55 | | |
| Quarz, Partikelgröße 0.9 - 1.3 mm | | | 20 | |
| Quarzmehl, Partikelgröße 0.1 - 0.70 µm | 13 | 10 | 10 | 5 |
| Titandioxidpartikel, | 5 | | | |
| Eisenoxidartikel | | | | 5 |
| Rußpartikel | | 10 | | |
| Graphit | | | 20 | |
| Aluminiumhydroxidtrihydrat | | | | 30 |

Die Konzentration des Biopolymers wird in Gew.-% bezogen auf die Gesamtmenge des Materials angegeben.

**Tabelle 8:**

| Eigenschaften | Muster 14 | Muster 15 | Muster 16 | Muster 17 | Vergleichsspüle |
|---|---|---|---|---|---|
| Schlagzähigkeit mJ/mm² | 2,8 | 2,3 | 2,7 | 2,7 | 2.3 |
| Kratzbeständigkeit | + | + | + | + | + |
| Taber-Abrieb, µg | 24 | 25 | 14 | | 12 |
| Wärmewiderstand* | + | + | + | + | + |
| Temperaturwechselbeständigkeit** | + | + | + | + | + |

Auch hier zeigen die sich in den Füllstoffen unterscheidenden Erfindungsbeispiele im Vergleich zum Vergleichsformkörper zum Teil erheblich bessere Messewerte insbesondere hinsichtlich der Schlagzähigkeit und der Kratzfestigkeit, wie auch des Abriebs.

### Beispiel 8:

Berechnung des Bio-Renewable Carbon Index (BCI) in erfindungsgemäßen Gießmassenzusammensetzungen

| Zusammensetzung | BRC, % | Muster 15 | Muster 16 |
|---|---|---|---|
| IBOA, C₁₃H₂₀O₂ | 77 | 44 | 45 |
| LMA, C₁₀H₃₀O₂ | 75 | 10,73 | 11 |
| 1,10-DDDA, C₁₀H₂₀O₄ | 60 | 5,34 | 4.4 |
| epoxidiertes Sojaöldiacrylat, C₆₃H₁₀₈O₁₅ | 89 | 1,6 | 1,3 |
| THBV, (-OCH(CH₃)CH₂-CO)ₓ(OCH(C₂H₅)CH₂CO-)_{y} | 100 | 17,9 | 2 |
| Rizinusölpolymer, C₅₇H₁₀₄O₉ | 100 | | 25 |
| **Gesamt BCI, %** | | 79.57 | 88,7 |

BCI für die Spülen aus den petrochemischen Rohstoffen ist 0.

Das BCI der chemischen Komponenten wird nach der folgenden Formel berechnet: $BCI = 100 \times \left(BRC/C\right) ,$ wobei
BCI = biologisch erneuerbarer Kohlenstoffindex in %
BRC = Menge an biologisch erneuerbarem Kohlenstoff
C = Gesamtkohlenstoffmenge

### Zum Beispiel: Isobornylacrylat (IBOA) hat die Formel: C₁₃H₂₀O₂

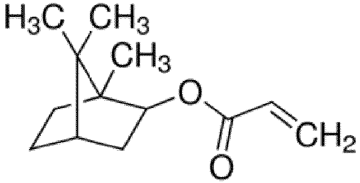

BRC = 10
C = 13 $\to BCI = 100 \times \left(10/13\right) = 76 , 9 %$

Das gesamte BCI für Bio-Kompositmaterial wird durch Berechnung des BRC im Verbund berechnet, abhängig vom BRC jeder Verbundkomponente.

### Zum Beispiel:

Das Muster 15 hat bezüglich der kohlenstoffhaltigen Chemikalien folgende Zusammensetzung bzw. Anteil in %:

| | |
|---|---|
| IBOA - | 57,1 |
| LMA - | 14,3 |
| 1,10 DDDA - | 8,9 |
| eSojaölDA - | 1,8 |
| THBV - | 17.9 |
| Gesamt | 100 |

Der prozentuale chemische Gehalt wird mit dem BCI-Gehalt multipliziert.

| | | |
|---|---|---|
| IBOA - | (57,1 x 77) / 100 = | 44 |
| LMA - | (14,3 x 75) / 100 = | 10,73 |
| 1,10 DDDA - | (8,9 x 60) /100 = | 5,34 |
| eSojaölDA - | (1,8 x 89) /100 = | 1,60 |
| THBV - | (17.9 x 100) / 100 = | 17.9 |
| Gesamt | | 79,57 |

Das zweite Charakteristikum, das eine Vorstellung vom Gehalt an nachwachsenden Rohstoffen gibt, ist der RRM-Wert (nachwachsender Rohstoff, in Gew.-%).
RRM = Gewicht der nachwachsenden Rohstoffe dividiert durch das Gewicht des Endprodukts
Die verwendeten anorganischen Füllstoffe werden zu 100 % aus erneuerbaren Quellen geliefert: Sandpartikel, Mineralpartikel, Ruß aus dem verbrannten Holz, Grafit.

Das Beispiel der RRM-Berechnung für die organische Phase wird anhand von Muster 15 erstellt.

Das Muster 15 aus den organischen Chemikalien hat eine Zusammensetzung in %:

| | |
|---|---|
| IBOA - | 57,1 |
| LMA - | 14,3 |
| 1,10 DDDA - | 8,9 |
| eSojaölDA - | 1,8 |
| THBV - | 17.9 |
| Gesamt | 100 |

Molekulargewicht für die Chemikalien ist:

| | |
|---|---|
| IBOA - | 208 |
| LMA - | 254 |
| 1,10 DDDA - | 282 |
| eSojaölDA - | 1104 |
| THBV (wiederholende Segment)- | 186 |

mit einem Gewichtsanteil an nachwachsenden Rohstoffen von:

| | |
|---|---|
| IBOA (C₁₁H₁₈O) - | 166 |
| LMA (C₁₃H₂₅O) - | 197 |
| 1,10 DDDA (C₁₂H₂₀O₂) - | 196 |
| eSoyaöIDA (C₅₅H₁₀₈O₁₁)- | 944 |
| THBV | 186 |

Der RRM-Wert für die Chemikalien beträgt:

| | |
|---|---|
| IBOA - | 100 x 166 / 208 = 79,8 |
| LMA - | 100 x 197 / 254 = 77,6 |
| 1,10 DDDA - | 100 x 196 / 282 = 69,5 |
| eSojaölDA - | 100 x 944 / 1104 = 85,5 |
| THBV (wiederholende Segment) - | 100 x 186 / 186 = 100 |

Der prozentuale chemische Gehalt wird mit dem RRM-Wert multipliziert.

| | | |
|---|---|---|
| IBOA - | (57,1 x 79,8) / 100 = | 45,57 |
| LMA - | (14,3 x 77,6) / 100 = | 11,10 |
| 1,10 DDDA - | (8,9 x 69,5) /100 = | 6,19 |
| eSojaölDA - | (1,8 x 85,5) /100 = | 1,54 |
| THBV - | (17.9 x 100) / 100 = | 17.9 |
| Gesamt | | 82,3 |

Das RRM-Wert für Bindermaterial beträgt 82.3 (Gew. %), während für die gesamte Spüle der RRM-Wert 94,69 (Gew. %) beträgt. $RRM = \left(82,3\times 30\right) / 100 + \left(70\times 100\right) / 100 = 94 , 69 \left(Gew. %\right)$

Im Vergleich hierzu beträgt der RRM-Wert für Spülen aus petrochemischen Rohstoffen 66 - 69 (Gew. %), da die verwendeten anorganischen Füllstoffpartikel, wie im Anspruch 1 (c) erwähnt, natürlichen Ursprungs sind.

## Patentansprüche

1. Wärmeaushärtbare biobasierte Gießmasse, umfassend:
(a) ein oder mehrere mono- und ein oder mehrere polyfunktionelle Acryl- und/oder Methacryl-Biomonomere pflanzlichen oder tierischen Ursprungs
(b) mehrere Polymere oder Copolymere gewählt aus Polyacrylaten, Polymethacrylaten, Polyolen, Polyestern aus recyceltem Material oder pflanzlichen oder tierischen Ursprungs,
(c) anorganische Füllstoffpartikel natürlichen Ursprungs,
wobei der Anteil des oder der mono- und polyfunktionellen Acryl- und Methacryl-Biomonomere 10 - 40 Gew.-%, der Anteil der Polymere oder Copolymere 1 - 16 Gew.-% und der Anteil der anorganischen Füllstoffpartikel 44 - 89 Gew.-% beträgt.

2. Gießmasse nach Anspruch 1, wobei das Gewichtverhältnis von monofunktionellen Biomonomeren zu polyfunktionellen Biomonomeren 2 : 1 bis 80 : 1, vorzugsweise 4 : 1 bis 70 : 1, insbesondere 5 : 1 bis 60 : 1 beträgt.

3. Gießmasse nach Anspruch 1 oder 2, wobei das oder die monofunktionellen Biomonomere gewählt sind aus biobasierten Acrylaten, nämlich n-Butylacrylat, Methylacrylat, Ethylacrylat, tert-Butylacrylat, Isobutylacrylat, Isodecylacrylat, Dihydrodicyclopentadienylacrylat, Ethyldiglykolacrylat, Heptadecylacrylat, 4-Hydroxybutylacrylat, 2-Hydroxyethylacrylat, Hydroxyethylcaprolaktonacrylat, Polycaprolaktonacrylat, Hydroxypropylacrylat, Laurylacrylat, Stearylacrylat, Tertiobutylacrylat, 2(2-Ethoxy) Ethylacrylat, Tetrahydrofurfurylacrylat, 2-Phenoxyethylacrylat, ethoxyliertes 4-Phenylacrylat, Trimethylcyclohexylacrylat, Octyldecylacrylat, Tridecylacrylat, ethoxyliertes 4-Nonylphenolacrylat, Isobornylacrylat, zyklisches Trimethylolpropanformalacrylat, ethoxyliertes 4-Laurylacrylat, Polyesteracrylat, Stearylacrylat hyperverzweigtes Polyesteracrylat, Melaminacrylat, Silikonacrylat, Epoxyacrylat, und aus biobasierten Methacrylaten, nämlich Methylmethacrylat, Ethylmethacrylat, n-Butylmethacrylat, Isobutylmethacrylat, tert-Butylmethacrylat, Behenylmethacrylat, Ehenylpolyethylenglykolmethacrylat, Cyclohexylmethacrylat, Isodecylmethacrylat, 2-Ethylhexylmethacrylat, Laurylmethacrylat, Stearylmethacrylat, Stearylpolyethylenglykolmethacrylat, Isotridecylmethacrylat, Ureidomethacrylat, Tetrahydrofurfurylmethacrylat, Phenoxyethylmethacrylat, 3,3,5-Trimethylzyclohexanolmethacrylat, Isobornylmethacrylat, Methoxypolyethylenglykolmethacrylat, Glycedylmethacrylat, Hexylethylmethacrylat, Glycerolformalmethacrylat, Lauryltetradecylmethacrylat, C17,4-Methacrylat.

4. Gießmasse nach einem der vorangehenden Ansprüche, wobei das oder die polyfunktionellen Biomonomere gewählt sind aus biobasierten Acrylaten, nämlich 1,6-Hexandioldiacrylat, Polyethylenglykoldiacrylat, Tetraethylenglykoldiacrylat, Tripropylenglykoldiacrylat, Polybutadiendiacrylat, 3 Methyl-1,5-Pentandioldiacrylat, ethoxyliertes Bisphenol A-Diacrylat, Dipropylenglykoldiacrylat, ethoxyliertes Hexandioldiacrylat, 1,10 Dekandioldiacrylat, Esterdioldiacrylat, alkoxyliertes Diacrylat, Trizyclodecandimethanoldiacrylat, propoxyliertes Neopentylglykoldiacrylat, Pentaerythritoltetraacrylat, Trimethylolpropantriacrylat, Di-Trimethylolpropantetraacrylat, Tris (2-Hydroxyethyl)isocyanurattriacrylat, Di-Pentaerythritpentaacrylat, ethoxyliertes Trimethylolpropantriacrylat, Pentaerythrittriacrylat, propoxyliertes Trimethylolpropantriacrylat, ethoxyliertes Pentaerythrittetraacrylat, propoxyliertes Glyceryltriacrylat, aliphatisches Urethandiacrylat, aliphatisches Urethanhexaacrylat, aliphatisches Urethantriacrylat, aromatisches Urethandiacrylat, aromatisches Urethantriacrylat, aromatisches Urethanhexaacrylat, Polyesterhexaacrylat, epoxydierte Sojaöldiacrylat und aus den biobasierten polyfunktionellen Methacrylaten, nämlich Triethylenglykoldimethacrylat, Ethylenglykoldimethacrylat, Polyethylenglykoldimethacrylat, 1,4-Butandioldimethacrylat, Diethylenglykoldimethacrylat, 1,6 Hexandioldimethacrylat, 1,10-Dekandioldimethacrylat, 1,3-Butylenglykoldimethacrylat, ethoxyliertes Bisphenol A-Dimethacrylat, Trizyclodecandimethanoldimethacrylat, Trimethylolpropantrimethacrylat.

5. Gießmasse nach einem der vorangehenden Ansprüche, wobei das Gewichtsverhältnis von mono- und polyfunktionellen Acrylaten und Methacrylaten zu den Polymeren oder Copolymeren 90:10 bis 60:40, vorzugsweise 85:15 bis 70:30 beträgt.

6. Gießmasse nach einem der vorangehenden Ansprüche, wobei die anorganische Füllstoffpartikel gewählt sind aus SiO₂, Al2O₃, TiO₂, ZrO₂, Fe₂O₃, ZnO, Cr₂O₅, Kohlenstoff, Metallen oder Metalllegierungen.

7. Gießmasse nach einem der vorangehenden Ansprüche, wobei die anorganischen Füllstoffpartikel eine Partikelgröße von 0,010 bis 8000 µm, vorzugsweise 0,05 bis 3000 µm, und insbesondere 0,1 bis 1300 µm aufweisen.

8. Gießmasse nach einem der vorangehenden Ansprüche, wobei die anorganische Füllstoffpartikel ein Seitenverhältnis von Länge zu Breite von 1,0 bis 1000 (Länge : Breite der Einzelpartikel) aufweisen.

9. Formkörper, hergestellt unter Verwendung einer Gießmasse nach einem der vorangehenden Ansprüche.

10. Formkörper nach Anspruch 9, wobei der Formkörper eine Küchenspüle, eine Duschwanne, ein Waschtisch, eine Badewanne, eine Arbeitsplatte oder ein Boden-, Wand- oder Deckenpaneel ist.

11. Verfahren zur Herstellung eines Formkörpers nach einem der Ansprüche 9 oder 10, bei dem eine Gießmasse nach einem der Ansprüche 1 bis 8 verwendet wird, die in eine Form gegeben wird, in der sie bei gegenüber Raumtemperatur erhöhter Temperatur polymerisiert, wonach der polymerisierte Formkörper der Form entnommen wird und abkühlt.

12. Verfahren nach Anspruch 11, wobei die Temperatur während der Polymerisation zwischen 60 - 140°C, vorzugsweise zwischen 75 - 130°C und insbesondere 80 - 110°C beträgt.

13. Verfahren nach Anspruch 11 oder 12, wobei die Haltezeit, während der die Gießmasse zur Polymerisation in der Form bleibt, zwischen 15 - 50 min, vorzugsweise 20 - 45 min und insbesondere 25 - 35 min beträgt.

## Claims

1. Heat-curable biobased casting composition, comprising:
(a) one or more monofunctional acrylic and/or methacrylic biomonomers and one or more polyfunctional acrylic and/or methacrylic biomonomers of vegetable or animal origin,
(b) two or more polymers or copolymers selected from polyacrylates, polymethacrylates, polyols, polyesters derived from recycled material or of vegetable or animal origin,
(c) inorganic filler particles of natural origin,
wherein the proportion of the monofunctional acrylic and methacrylic biomonomer(s) and of the polyfunctional acrylic and methacrylic biomonomer(s) is 10-40% by weight, the proportion of the polymers or copolymers is 1-16% by weight and the proportion of the inorganic filler particles is 44-89% by weight.

2. Casting composition according to Claim 1, wherein the weight ratio of monofunctional biomonomers to polyfunctional biomonomers is 2:1 to 80:1, preferably 4:1 to 70:1, in particular 5:1 to 60:1.

3. Casting composition according to Claim 1 or 2, wherein the monofunctional biomonomer(s) are selected from biobased acrylates, namely n-butyl acrylate, methyl acrylate, ethyl acrylate, tert-butyl acrylate, isobutyl acrylate, isodecyl acrylate, dihydrodicyclopentadienyl acrylate, ethyldiglycol acrylate, heptadecyl acrylate, 4-hydroxybutyl acrylate, 2-hydroxyethyl acrylate, hydroxyethylcaprolactone acrylate, polycaprolactone acrylate, hydroxypropyl acrylate, lauryl acrylate, stearyl acrylate, tert-butyl acrylate, 2-(2-ethoxy)ethyl acrylate, tetrahydrofurfuryl acrylate, 2-phenoxyethyl acrylate, ethoxylated 4-phenyl acrylate, trimethylcyclohexyl acrylate, octyldecyl acrylate, tridecyl acrylate, ethoxylated 4-nonylphenol acrylate, isobornyl acrylate, cyclic trimethylolpropane formal acrylate, ethoxylated 4-lauryl acrylate, polyester acrylate, stearyl acrylate, hyperbranched polyester acrylate, melamine acrylate, silicone acrylate, epoxy acrylate, and from biobased methacrylates, namely methyl methacrylate, ethyl methacrylate, n-butyl methacrylate, isobutyl methacrylate, tert-butyl methacrylate, behenyl methacrylate, behenyl polyethylene glycol methacrylate, cyclohexyl methacrylate, isodecyl methacrylate, 2-ethylhexyl methacrylate, lauryl methacrylate, stearyl methacrylate, stearyl polyethylene glycol methacrylate, isotridecyl methacrylate, ureidomethacrylate, tetrahydrofurfuryl methacrylate, phenoxyethyl methacrylate, 3,3,5-trimethylcyclohexanol methacrylate, isobornyl methacrylate, methoxypolyethylene glycol methacrylate, glycidyl methacrylate, hexylethyl methacrylate, glycerol formal methacrylate, lauryl tetradecyl methacrylate, C17,4-methacrylate.

4. Casting composition according to any of the preceding claims, wherein the polyfunctional biomonomer(s) are selected from biobased acrylates, namely 1,6-hexanediol diacrylate, polyethylene glycol diacrylate, tetraethylene glycol diacrylate, tripropylene glycol diacrylate, polybutadiene diacrylate, 3-methyl-1,5-pentanediol diacrylate, ethoxylated bisphenol A diacrylate, dipropylene glycol diacrylate, ethoxylated hexanediol diacrylate, 1,10-decanediol diacrylate, esterdiol diacrylate, alkoxylated diacrylate, tricyclodecanedimethanol diacrylate, propoxylated neopentyl glycol diacrylate, pentaerythritol tetraacrylate, trimethylolpropane triacrylate, ditrimethylolpropane tetraacrylate, tris(2-hydroxyethyl)isocyanurate triacrylate, dipentaerythritol pentaacrylate, ethoxylated trimethylolpropane triacrylate, pentaerythritol triacrylate, propoxylated trimethylolpropane triacrylate, ethoxylated pentaerythritol tetraacrylate, propoxylated glyceryl triacrylate, aliphatic urethane diacrylate, aliphatic urethane hexaacrylate, aliphatic urethane triacrylate, aromatic urethane diacrylate, aromatic urethane triacrylate, aromatic urethane hexaacrylate, polyester hexaacrylate, epoxidized soybean oil diacrylate, and from biobased polyfunctional methacrylates, namely triethylene glycol dimethacrylate, ethylene glycol dimethacrylate, polyethylene glycol dimethacrylate, 1,4-butanediol dimethacrylate, diethylene glycol dimethacrylate, 1,6-hexanediol dimethacrylate, 1,10-decanediol dimethacrylate, 1,3-butylene glycol dimethacrylate, ethoxylated bisphenol A dimethacrylate, tricyclodecanedimethanol dimethacrylate, trimethylolpropane trimethacrylate.

5. Casting composition according to any of the preceding claims, wherein the weight ratio of mono- and polyfunctional acrylates and methacrylates to the polymers or copolymers is 90:10 to 60:40, preferably 85:15 to 70:30.

6. Casting composition according to any of the preceding claims, wherein the inorganic filler particles are selected from SiO₂, Al2O₃, TiO₂, ZrO₂, Fe₂O₃, ZnO, Cr₂O₅, carbon, metals or metal alloys.

7. Casting composition according to any of the preceding claims, wherein the inorganic filler particles have a particle size of 0.010 to 8000 µm, preferably 0.05 to 3000 µm and in particular 0.1 to 1300 µm.

8. Casting composition according to any of the preceding claims, wherein the inorganic filler particles have an aspect ratio of length to width of 1.0 to 1000 (length:width of the individual particles).

9. Shaped article produced using a casting composition according to any of the preceding claims.

10. Shaped article according to Claim 9, wherein the shaped article is a kitchen sink, a shower tray, a washstand, a bathtub, a worktop or a floor, wall or ceiling panel.

11. Process for producing a shaped article according to either of Claims 9 and 10, in which a casting composition according to any of Claims 1 to 8 is employed and introduced into a mould in which it polymerizes at a temperature elevated relative to room temperature and the polymerized shaped article is subsequently removed from the mould and cooled.

12. Process according to Claim 11, wherein the temperature during the polymerization is between 60-140°C, preferably between 75-130°C and in particular 80-110°C.

13. Process according to Claim 11 or 12, wherein the holding time during which the casting composition remains in the mould for polymerization is between 15-50 min, preferably 20-45 min and in particular 25-35 min.

## Revendications

1. Masse de coulage thermodurcissable, biosourcée, comprenant :
(a) un ou plusieurs biomonomères d'acryle et/ou de méthacryle monofonctionnels et un ou plusieurs biomonomères d'acryle et/ou de méthacryle polyfonctionnels d'origine végétale ou animale,
(b) plusieurs polymères ou copolymères choisis parmi les polyacrylates, les polyméthacrylates, les polyols, les polyesters en matériau recyclé ou d'origine végétale ou animale,
(c) des particules de charge inorganiques d'origine naturelle,
la proportion du ou des biomonomères d'acryle et de méthacryle monofonctionnels et polyfonctionnels représentant 10 à 40% en poids, la proportion des polymères ou copolymères représentant 1 à 16% en poids et la proportion des particules de charge inorganiques représentant 44 à 89% en poids.

2. Masse de coulage selon la revendication 1, le rapport en poids des biomonomères monofonctionnels aux biomonomères polyfonctionnels valant 2:1 à 80:1, de préférence 4:1 à 70:1, en particulier 5:1 à 60:1.

3. Masse de coulage selon la revendication 1 ou 2, le ou les biomonomères monofonctionnels étant choisis parmi les acrylates biosourcés, à savoir l'acrylate de n-butyle, l'acrylate de méthyle, l'acrylate d'éthyle, l'acrylate de tert-butyle, l'acrylate d'isobutyle, l'acrylate d'isodécyle, l'acrylate de dihydrodicyclopentadiényle, l'acrylate d'éthyldiglycol, l'acrylate d'heptadécyle, l'acrylate de 4-hydroxybutyle, l'acrylate de 2-hydroxyéthyle, l'acrylate d'hydroxyéthylcaprolactone, l'acrylate de polycaprolactone, l'acrylate d'hydroxypropyle, l'acrylate de lauryle, l'acrylate de stéaryle, l'acrylate de tert-butyle, l'acrylate de 2(2-éthoxy)éthyle, l'acrylate de tétrahydrofurfuryle, l'acrylate de **2-**phénoxyéthyle, l'acrylate de 4-phényle éthoxylé, l'acrylate de triméthylcyclohexyle, l'acrylate d'octyldécyle, l'acrylate de tridécyle, l'acrylate de **4-**nonylphénol éthoxylé, l'acrylate d'isobornyle, l'acrylate de formaldéhyde de triméthylolpropane cyclique, l'acrylate de 4-lauryle éthoxylé, l'acrylate de polyester, l'acrylate de stéaryle, le polyesteracrylate hyperramifié, l'acrylate de mélamine, l'acrylate de silicone, l'époxyacrylate et les méthacrylates biosourcés, à savoir le méthacrylate de méthyle, le méthacrylate d'éthyle, le méthacrylate de **n-**butyle, le méthacrylate d'isobutyle, le méthacrylate de tert-butyle, le méthacrylate de béhényle, le méthacrylate de béhénylpolyéthylèneglycol, le méthacrylate de cyclohexyle, le méthacrylate d'isodécyle, le méthacrylate de 2-éthylhexyle, le méthacrylate de lauryle, le méthacrylate de stéaryle, le méthacrylate de stéarylpolyéthylèneglycol, le méthacrylate d'isotridécyle, l'uréidométhacrylate, le méthacrylate de tétrahydrofurfuryle, le méthacrylate de phénoxyéthyle, le méthacrylate de 3,3,5-triméthylcyclohexanol, le méthacrylate d'isobornyle, le méthacrylate de méthoxypolyéthylèneglycol, le méthacrylate de glycidyle, le méthacrylate d'hexyléthyle, le méthacrylate de formaldéhyde de glycérol, le méthacrylate de lauryltétradécyle, le C17,4-méthacrylate.

4. Masse de coulage selon l'une des revendications précédentes, le ou les biomonomères polyfonctionnels étant choisis parmi les acrylates biosourcés, à savoir le diacrylate de 1,6-hexanediol, le diacrylate de polyéthylèneglycol, le diacrylate de tétraéthylèneglycol, le diacrylate de tripropylèneglycol, le diacrylate de polybutadiène, le diacrylate de 3-méthyl-1,5-pentanediol, le diacrylate de bisphénol A éthoxylé, le diacrylate de dipropylèneglycol, le diacrylate d'hexanediol éthoxylé, le diacrylate de 1,10-décanediol, le diacrylate d'esterdiol, le diacrylate alcoxylé, le diacrylate de tricyclodécanediméthanol, le diacrylate de néopentylglycol propoxylé, le tétraacrylate de pentaérythritol, le triacrylate de triméthylolpropane, le tétraacrylate de di-triméthylolpropane, le triacrylate de tris(2-hydroxyéthyl)isocyanurate, le pentaacrylate de di-pentaérythritol, le triacrylate de triméthylolpropane éthoxylé, le triacrylate de pentaérythritol, le triacrylate de triméthylolpropane propoxylé, le tétraacrylate de pentaérythritol éthoxylé, le triacrylate de glycéryle propoxylé, le diacrylate d'uréthane aliphatique, l'hexaacrylate d'uréthane aliphatique, le triacrylate d'uréthane aliphatique, le diacrylate d'uréthane aromatique, le triacrylate d'uréthane aromatique, l'hexaacrylate d'uréthane aromatique, l'hexaacrylate de polyester, le diacrylate d'huile de soja époxydé et les méthacrylates polyfonctionnels biosourcés, à savoir le diméthacrylate de triéthylèneglycol, le diméthacrylate d'éthylèneglycol, le diméthacrylate de polyéthylèneglycol, le diméthacrylate de 1,4-butanediol, le diméthacrylate de diéthylèneglycol, le diméthacrylate de 1,6-hexanediol, le diméthacrylate de 1,10-décanediol, le diméthacrylate 1,3-butylèneglycol, le diméthacrylate de bisphénol A éthoxylé, le diméthacrylate de tricyclodécanediméthanol, le triméthacrylate de triméthylolpropane.

5. Masse de coulage selon l'une des revendications précédentes, le rapport en poids des acrylates et méthacrylates monofonctionnels et polyfonctionnels aux polymères ou copolymères valant 90:10 à 60:40, de préférence 85:15 à 70:30.

6. Masse de coulage selon l'une des revendications précédentes, les particules de charge inorganiques étant choisies parmi SiO₂, Al₂O₃, TiO₂, ZrO₂, Fe₂O₃, ZnO, Cr₂O₅, le carbone, les métaux ou les alliages métalliques.

7. Masse de coulage selon l'une des revendications précédentes, les particules de charge inorganiques présentant une grosseur de particule de 0,010 à 8000 µm, de préférence de 0,05 à 3000 µm et en particulier de 0,1 à 1300 µm.

8. Masse de coulage selon l'une des revendications précédentes, les particules de charge inorganiques présentant un rapport d'aspect de longueur à largeur de 1,0 à 1000 (longueur:largeur des particules individuelles).

9. Corps moulé, fabriqué à l'aide d'une masse de coulage selon l'une des revendications précédentes.

10. Corps moulé selon la revendication 9, le corps moulé étant un évier de cuisine, un receveur de douche, un lavabo, une baignoire, un plan de travail ou un panneau de sol, mural ou de plafond.

11. Procédé de fabrication d'un corps moulé selon l'une des revendications 9 ou 10, dans lequel est utilisée une masse de coulage selon l'une des revendications 1 à 8, qui est introduite dans un moule, dans lequel elle polymérise à une température augmentée par rapport à la température ambiante, suite à quoi le corps moulé polymérisé est prélevé du moule et refroidit.

12. Procédé selon la revendication 11, la température pendant la polymérisation étant située entre 60 - 140°C, de préférence entre 75 - 130°C et en particulier de 80 - 110°C.

13. Procédé selon la revendication 11 ou 12, la durée de séjour pendant laquelle la masse de coulage reste dans le moule pour la polymérisation étant située entre 15 - 50 min, de préférence entre 20 - 45 min et en particulier de 25 - 35 min.
